# EUROPÄISCHE PATENTANMELDUNG

(11) **EP 3 483 683 A1**
(43) Veröffentlichungstag der Anmeldung: **15.05.2019**
(21) Anmeldenummer: 17200861.7
(22) Anmeldetag: 09.11.2017
(51) Int. Cl.: G05B 19/418

(54) **AUTONOMES SYSTEM**

(71) Anmelder: Siemens Aktiengesellschaft, 80333 München (DE)
(72) Erfinder: Dietrich, Vincent, 81549 München (DE); Fiegert, Michael, 81739 München (DE)

(57) **Zusammenfassung**

Die Erfindung betrifft ein autonomes System (1), aufweisend mindestens ein Modul (10) mit mindestens einer Eigenschaft (12), eine zentrale Einheit (20), wobei die zentrale Einheit (20) zum Planen einer Konfiguration des mindestens einen Moduls (10) auf Basis der mindestens einen Eigenschaft (12) und zum Umsetzen der geplanten Konfiguration mittels des mindestens einen Moduls (10) eingerichtet ist. Ferner ist die Erfindung auf ein Computer-implementiertes Verfahren, Computerprogrammprodukt und eine zentrale Einheit gerichtet.

## Beschreibung

### 1. Technisches Gebiet

Die Erfindung betrifft ein autonomes System. Ferner ist die Erfindung auf ein Computer-implementiertes Verfahren, Computerprogrammprodukt und eine zentrale Einheit gerichtet. Die Erfindung kann in den technischen Bereichen der Automatisierungstechnik und Robotik eingesetzt werden.

### 2. Stand der Technik

Die Optimierung von Prozessen gewinnt in der industriellen Automatisierungstechnik zunehmend an Bedeutung. In Automatisierungsanlagen, wie Fertigungs- Produktionsanlagen oder Fertigungsstraßen für die Produktion unterschiedlicher Gegenstände, wie Kraftfahrzeuge, Mediengeräte, Möbel, usw., spielen insbesondere die Prozesse der Planung einer Konfiguration sowie deren Umsetzung eine entscheidende Rolle. Unter Konfiguration wird in diesem Kontext die Anordnung oder Zusammenstellung der Komponenten einer Automatisierungsanlage verstanden.

In der Planung werden die Komponenten der Automatisierungsanlage zunächst ausgewählt, positioniert und miteinander in Beziehung gesetzt. In der Umsetzung- oder dem Aufbau werden die Komponenten montiert und miteinander verbunden.

Die einzelnen Prozesse sind jedoch komplex. Herkömmlich sind in einer Automatisierungsanalage zwischen den Komponenten mehrere Verbindungen erforderlich, wie Kommunikationsverbindungen und Kabelverbindungen etc. Diese Verbindungsarten müssen in der Planung und Umsetzung für ein fehlerfreies Zusammenarbeiten der Komponenten und der Anlage berücksichtigt werden.

Gemäß dem Stand der Technik erfolgen diese Prozesse manuell. Dementsprechend sind eine Vielzahl unterschiedlicher Personen, Konstrukteur oder Monteur etc. an den Prozessen beteiligt. Folglich sind die Prozesse oftmals ineffizient, insbesondere zeit- und kostenintensiv sowie fehleranfällig.

Die vorliegende Erfindung stellt sich daher die Aufgabe ein autonomes System bereitzustellen, welches sich selbst konfigurieren kann und dabei ebenfalls effizient und zuverlässig ist.

### 3. Zusammenfassung der Erfindung

Die oben genannte Aufgabe wird erfindungsgemäß durch ein autonomes System gelöst, aufweisend:
a. mindestens ein Modul mit mindestens einer Eigenschaft,
b. eine zentrale Einheit, wobei
c. die zentrale Einheit
   - zum Planen einer Konfiguration des mindestens einen Moduls auf Basis der mindestens einen Eigenschaft, eingerichtet ist und
   - zum Umsetzen der geplanten Konfiguration mittels des mindestens einen Moduls eingerichtet ist.

Dementsprechend ist die Erfindung auf ein autonomes System gerichtet. Der Begriff autonom steht für selbstständig, selbstbestimmt und unabhängig. Ein beispielhaftes autonomes System ist ein autonomes Fahrzeug. Unter autonomem Fahren ist die Fortbewegung von Fahrzeugen, mobilen Robotern und fahrerlosen Transportsystemen zu verstehen, die sich weitgehend autonom verhalten.

Das erfindungsgemäße System weist ein oder mehrere Module sowie eine zentrale Einheit auf. Die Module können auch als Baukastenelemente, Bauelemente oder sonstige Elemente eines modularen Baukastensystems bezeichnet werden. Mit anderen Worten ist das modulare Baukastensystem flexibel änderbar, beispielsweise um Module erweiterbar. Beispielsweise kann ein Modul als eine Robotereinheit ausgebildet sein. Alternativ kann ein Modul auch als Batterieelement, ein Funkelement, ein Sensor, ein Aktor, ein Kabelschnittstellenelement, ein Kameraelement, ein Greiferelement, ein variables Strukturelement

Bestimmte Module, wie Batterieelemente oder Funkelemente können auch in andere Module integriert werden und sind somit Bestandteil der Module. Beispielsweise kann eine Batterie in ein Modul integriert werden, insbesondere wenn der Stromverbrauch des Moduls niedrig ist.

Die zentrale Einheit kann auch
- zum Einlesen der mindestens einen Eigenschaft des mindestens einen Moduls und/oder
- zum Wahrnehmen des mindestens einen Moduls auf Basis der mindestens einen Eigenschaft eingerichtet sein. Diese Schritte können insbesondere der Planung vorgeschaltet werden.

Die Wahrnehmung der Module basiert auf Wissen über Geometrie und/oder Identifikationsmerkmale der Module. Die Umgebungswahrnehmung kann auch als Perzeption oder Lokalisierung bezeichnet werden. Die Wahrnehmung dient dazu die Positionen der Module zu bestimmen. Die Wahrnehmung kann in zwei Schritte unterteilt werden, die Identifikation eines Moduls und die Posenschätzung des Moduls. Beispielsweise kann eine zuverlässige 6D Posenschätzung durchgeführt werden.

In einem beispielhaften autonomen System werden mindestens ein Sensormodul (Kameramodul) und ggf. auch ein Robotermodul (Änderung des Blickwinkels) verwendet. Durch das Kameramodul können Bilder aufgenommen werden. Dadurch kann die aktuelle Identität und Lage der Module im Arbeitsraum bestimmt werden.

Die zentrale Einheit kann als Steuereinheit ausgebildet sein, welche die Konfiguration des einen Moduls oder der mehreren Module autonom plant sowie umsetzt. Unter Konfiguration wird die Kombination oder das Set der Module verstanden bzw. deren Anordnung sowie deren Verbindungen- oder Verbindungsarten verstanden. Für die Planung reicht beispielsweise eine virtuelle Repräsentation der Module aus. Die eingeplanten Module müssen für die Umsetzung jedoch real vorhanden sein.

Eigenschaften des Moduls liefern insbesondere Anhaltspunkte für die Planung. Beispielsweise weisen die Module geometrische Eigenschaften auf, wie Aussparungen oder Einbuchtungen, die es ermöglichen, dass die Module aus verschiedenen Richtungen beispielsweise mittels eines 2-Backengreifers gegriffen und platziert werden können. Auch andere Eigenschaften, wie Stromverbrauch oder sonstige Fähigkeiten, können Anhaltspunkte darauf liefern, ob ein Modul eine externe Stromversorgung oder ein Kommunikationsmodul benötigt etc. Ferner können geometrische Nebenbedingungen, wie beispielsweise die Erreichbarkeit eines Moduls durch die zentrale Einheit berücksichtigt werden. Ferner können alternativ oder zusätzlich die Modulverfügbarkeit, Umgebungseigenschaften oder eine Aufgabenbeschreibung in die Planung mit einfließen. Die Umgebungsbeschreibung umfasst u.a. beispielhaft feste Strukturen, eine Beleuchtung, verbotene Bereiche. Die Aufgabenbeschreibung umfasst eine Montagesequenz, eine Qualitätskontrolle und eine zeitliche Anforderung etc.

Die geplante Konfiguration wird anhand mindestens eines Moduls umgesetzt. Insbesondere setzt die zentrale Einheit die Konfiguration mithilfe der Module um, insbesondere einer Robotereinheit als ein Modul. Dieses Modul kann auch als Roboter-Modul bezeichnet werden. Mit anderen Worten orchestriert die zentrale Einheit den Vorgang und die Ausführung der Umsetzung der Konfiguration mit einem oder mehreren Roboter-Modulen. Hierzu kann sie mit Steuereinheiten der Module kommunizieren. In einem beispielhaften autonomen System kann eine Steuereinheit als zentrale Einheit mithilfe einer Robotereinheit als Modul eine Haltevorrichtung für Bauteile oder andere Anwendungen konfigurieren. Mithilfe der Robotereinheit kann das System auch autonom rekonfiguriert werden.

Der Vorteil liegt darin, dass die Planung sowie Umsetzung der Konfiguration im Gegensatz zum Stand der Technik autonom durch die zentrale Einheit durchgeführt wird. Dadurch kann Personal sowie Zeit eingespart werden und folglich die Kosten reduziert werden. Weiterhin ist das autonome System vorteilhafterweise weniger fehleranfällig und folglich zuverlässig. Ferner können als ein weiterer Vorteil sehr einfach Daten gesammelt werden, insbesondere über verschiedene Konfigurationen und damit ein Erfahrungsschatz aufgebaut werden. Dementsprechend wächst das Engineeringwissen und das autonome System kann sich aus Erfahrung verbessern.

In einer Ausgestaltung ist die zentrale Einheit eine Steuerungseinheit oder eine sonstige Rechnereinheit.

In einer weiteren Ausgestaltung ist mindestens eine Anwendung zum Planen und/oder Umsetzen auf der zentralen Einheit gespeichert.

Dementsprechend kann die Perzeption- und/oder Planungssoftware auf einer Cloud-Infrastruktur gespeichert werden, auf welche die zentrale Einheit zur Perzeption und/oder Planung zugreifen kann. Dadurch wird die zentrale Einheit vorteilhafterweise von rechenaufwändigen Aufgaben oder Prozessen entlastet. Alternativ kann die Anwendung auch direkt auf der zentralen Einheit oder einer sonstigen Einheit gespeichert werden. Für die Perzeption und Planung ist auch eine einzige Anwendung möglich. Die Anwendung kann auch als Applikation oder Software verstanden werden. Gleiches gilt für andere Anwendungen, wie Konfiguration.

In einer weiteren Ausgestaltung sind die mindestens eine Eigenschaft des mindestens einen Moduls und/oder mindestens eine Eigenschaft der zentralen Einheit als digitale Beschreibung gespeichert. Dementsprechend weist das autonome System eine digitale Beschreibung auf. In der digitalen Beschreibung sind die Eigenschaften, Fähigkeiten und/oder sonstige Daten gespeichert. Die Eigenschaften können den Modulen oder sonstigen Einheiten zugeordnet sein. Hierzu sind Identifikationselemente, Greifposen für gängige Greifer, Stromverbrauch, Geometrie und Andockpunkte als beispielhafte Eigenschaften aufzulisten. Die digitale Beschreibung kann beliebig geändert werden. Das Ändern umfasst beispielsweise das Löschen oder Erweitern der Daten. Mit anderen Worten, sind die Eigenschaften in digitaler Form, nicht gedruckter Form verfügbar. Die Daten können dadurch vorteilhafterweise sicher und effizient weiterverarbeitet werden. Alternativ ist es auch möglich eine Beschreibung in gedruckter Form einzulesen und in eine digitale Beschreibung zum Einlesen durch die zentrale Einheit umzuwandeln.

In einer weiteren Ausgestaltung ist die mindestens eine Eigenschaft des mindestens einen Moduls eine bestimmte Geometrie, eine Griffpose oder ein Identifikationselement, insbesondere ein Marker oder sonstiger Tag. Dementsprechend können vielfältige und unterschiedliche Eigenschaften in der digitalen Beschreibung gespeichert werden und in die Planung mit einfließen. Hierbei können Marker auf den Modulen angebracht werden, beispielsweise in alle Sichtrichtungen der Robotereinheit. Die Marker dienen der Identifikation sowie Posenschätzung. Alternativ ist es auch möglich, dass die Module in der digitalen Beschreibung Perzeptionsfunktionen zur Verfügung stellen, um diese mithilfe von Sensordaten zu lokalisieren. Beispielsweise können hierfür vortrainierte neuronale Netzwerke verwendet werden. Alternativ können die Module in ihrer digitalen Beschreibung auch geeignete Griffbereiche und Griffposen zur Verfügung stellen. Die Planung ist somit beliebig und flexibel für verschiedene Anwendungen und Module unterschiedlicher Beschaffenheit, wie Größe etc., einsetzbar.

In einer weiteren Ausgestaltung weist das mindestens eine Modul mindestens eine Verbindung zu mindestens einem weiteren Modul, der zentralen Einheit und/oder einer anderen Einheit auf.

In einer weiteren Ausgestaltung weist das mindestens eine Modul und/oder die zentrale Einheit mindestens eine Schnittstelle für die mindestens eine Verbindung auf. Dementsprechend können die Module jeweils eine oder mehrere Schnittstellen oder sonstige Elemente aufweisen, um eine oder mehrere Verbindungen herzustellen. Beispielsweise kann ein Modul eine Steckerschnittstelle haben, um eine Kabelverbindung herzustellen. Zusätzlich oder alternativ kann ein Modul eine oder mehrere weitere Schnittstellen haben, um beispielsweise die Kommunikationsverbindung herzustellen. Alternativ oder zusätzlich verwenden die Module ein gemeinsames Protokoll.

In einer weiteren Ausgestaltung ist die mindestens eine Verbindung eine mechanische Verbindung, eine Kommunikationsverbindung oder eine Verbindung zur Energieversorgung. Dementsprechend können die Module untereinander, die Module mit der zentralen Einheit, die Module mit einer sonstigen Einheit etc. verbunden sein. Die zentrale Einheit kann auch mit anderen Einheiten als den Modulen verbunden sein. Die Verbindung kann für eine bestimmte Funktion, wie Kommunikation verwendet werden. Für eine oder mehrere Funktionen können eine oder mehrere Verbindungen verwendet werden. Die Kommunikationsverbindung ermöglicht beispielsweise einen effizienten bidirektionalen Datenaustausch. Als Verbindung zur Energieversorgung kann eine Kabelverbindung oder auch Wireless Charging Verwendung finden.

In einer weiteren Ausgestaltung ist die mechanische Verbindung durch Normung standardisiert. Dementsprechend ist die mechanische Verbindung standardisiert. Dadurch können verschiedene Hersteller vorteilhafterweise Module beisteuern, die mit dem gleichen System konfiguriert werden können. Die mechanische Verbindung ist als weiterer Vorteil mit Profilschienen kompatibel und vielseitig mit Strukturelementen kombinierbar.

In einer weiteren Ausgestaltung kann die mechanische Verbindung durch einen Druckknopf oder einen Aktor hergestellt und getrennt werden. Dementsprechend ist die mechanische Verbindung manuell oder automatisch betreibbar. Dadurch können die Module vorteilhafterweise einfach und effizient rekonfiguriert werden. Die Module können dementsprechend ohne ein Planungs- und Konfigurierungssystem verwendet werden.

In einer weiteren Ausgestaltung ist die Kommunikationsverbindung eine Busverbindung oder Funkverbindung für den Datenaustausch. Dementsprechend können unterschiedliche Bussysteme aus dem Industriekontext verwendet werden. Diese Verbindungen haben sich hinsichtlich der Zuverlässigkeit als besonderes vorteilhaft erwiesen. Ferner sind die Verbindungen industrietauglich und mit verschiedenen Systemen kompatibel.

In einer weiteren Ausgestaltung ist die zentrale Einheit weiterhin zum Ordern des mindestens einen Moduls oder anderer Elemente eingerichtet. Dementsprechend werden die Module oder andere Elemente geordert, beispielsweise aus einem Katalog oder Lagersystem.

Die Erfindung betrifft ferner ein Computer-implementiertes Verfahren, aufweisend die folgenden Schritte:
- Planen einer Konfiguration mindestens eines Moduls auf Basis mindestens einer Eigenschaft des mindestens einen Moduls durch eine zentrale Einheit, und
- Umsetzen der geplanten Konfiguration mittels des mindestens einen Moduls durch die zentrale Einheit.

Die Erfindung betrifft ferner ein Computerprogrammprodukt mit einem Computerprogramm, das Mittel zur Durchführung des oben beschriebenen Verfahrens, wenn das Computerprogramm auf einer programmgesteuerten Einrichtung zur Ausführung gebracht wird.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen. Als programmgesteuerte Einrichtung kommt insbesondere eine Steuereinrichtung, wie beispielsweise eine Industriesteuerungs-PC oder eine Speicherprogrammierbare Steuerung oder ein Programmable Logic Controller, kurz PLC, oder ein Mikroprozessor für eine Smartcard oder dergleichen in Frage.

Die Erfindung betrifft ferner eine zentrale Einheit zum Durchführen des obigen Verfahrens.

### 4. Kurze Beschreibung der Zeichnungen

In der folgenden detaillierten Beschreibung werden vorliegend bevorzugte Ausführungsformen der Erfindung weiter beschrieben mit Bezug auf die folgenden Figuren.
- FIG 1: zeigt eine schematische Darstellung eines erfindungsgemäßen autonomen Systems.
- FIG 2: zeigt eine schematische Darstellung einer mechanischen Verbindung gemäß einer Ausführungsform der Erfindung.
- FIG 3: zeigt eine schematische Darstellung eines autonomen Systems gemäß einer Ausführungsform der Erfindung.

### 5. Beschreibung der bevorzugten Ausführungsformen

Im Folgenden werden bevorzugte Ausführungsformen der vorliegenden Erfindung in Bezug auf die Figuren beschrieben.

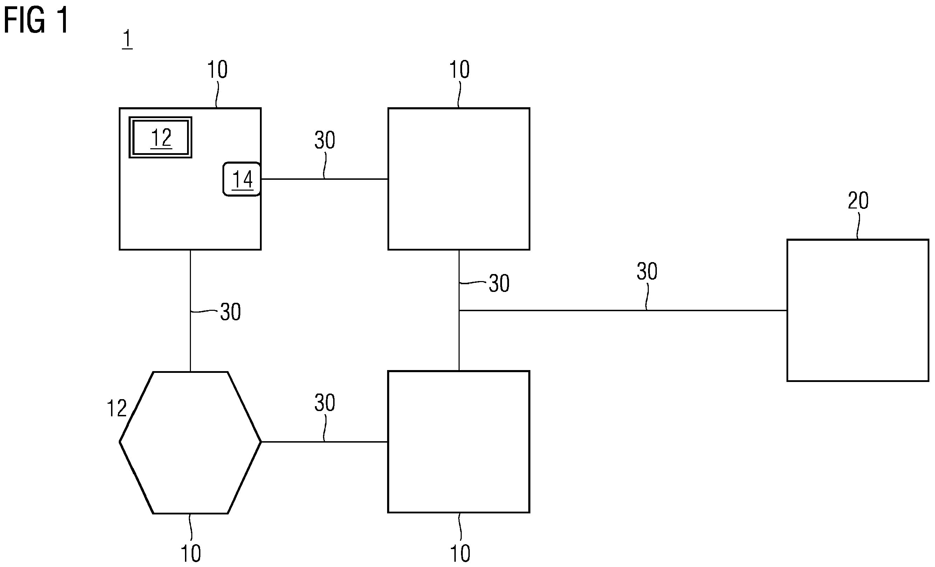

Figur 1 zeigt ein autonomes System 1. Das autonome System 1 weist eine Vielzahl von Modulen 10 auf, welche insbesondere in Form eines modularen Baukastensystems angeordnet sind. In Figur 1 sind beispielhaft vier Module 10 dargestellt. Bei den Modulen 10 kann es sich um beliebige Elemente handeln, wie eine Robotereinheit, Batterieelement, Funkelement, Linearaktor, Kraftmomentensensor, Greiferelement, Kameraelement, Basis Distanzelement, Kabelschnittstellenelement etc. Das Baukastensystem kann beliebig geändert werden. Dementsprechend kann das Baukastensystem um Module 10 ergänzt werden oder es können von dem Baukastensystem Module 10 entfernt werden. Folglich können auch einzelne Module 10 ausgetauscht werden.

Ferner weist das autonome System 1 neben der Vielzahl der Module 10 eine weitere Einheit auf, die zentrale Einheit 20 gemäß Figur 1. Bei der zentralen Einheit 20 kann es sich um eine Steuerungseinheit handeln.

Die Module 10 können untereinander verbunden sein. Alternativ oder zusätzlich können die Module 10 mit der zentralen Einheit 20 verbunden sein. Die zentrale Einheit 20 kann mit einem Modul oder mehreren Modulen der Vielzahl der Module 10 verbunden sein. Alternativ oder zusätzlich kann die zentrale Einheit 20 mit einer weiteren Einheit verbunden sein (nicht gezeigt). In Figur 1 sind alle Module 10 untereinander verbunden sowie mit der zentralen Einheit 20, durch eine oder mehrere Verbindungen 30. Eine Verbindung 30 kann als mechanische Verbindung, eine Kommunikationsverbindung oder eine Kabelverbindung ausgebildet sein.

Die zentrale Einheit 20 liest eine Eigenschaft 12 eines Moduls 10 oder die jeweiligen Eigenschaften mehrerer Module 10 ein und plant eine Konfiguration des Moduls auf Basis der Eigenschaften und/oder weiterer Daten.

Beispielhafte Eigenschaften sind ebenfalls in Figur 1 dargestellt. Ein Modul 10 weist einen Marker 12 sowie eine Schnittstelle 14 auf. Der Marker 12 und die Schnittstelle 14 sind zur besseren Verständlichkeit vereinfacht dargestellt. Ein weiteres Modul 10 unterscheidet sich in der Geometrie 12 von den anderen Modulen 10. Das weitere Modul 10 weist im Gegensatz zu den anderen Modulen 10 keine rechteckige Form auf. Die Formen sind ebenfalls vereinfacht dargestellt und können sich beispielsweise hinsichtlich Einbuchtungen oder Aussparungen unterscheiden.

Die zentrale Einheit 20 kann beliebige Software-Anwendungen verwenden.

Eine Perzeptionssoftware kann der Perzeption dienen. Die Module 10 können wahrgenommen werden. Die Perzeptionssoftware mit Identifikationselementen 12 der Module 10 ermöglicht beispielsweise eine zuverlässige 6D Posenschätzung der Module 10.

Ferner kann eine Planungssoftware der Planung dienen. Die Planung erfolgt beispielsweise auf einer Beschreibung der Montageaufgabe, den Ressourcen, der Umgebung und Kinematik der zentralen Einheit 20, welche Module 10 notwendig sind und wie die Module 10 miteinander kombiniert werden können. Beispielsweise kann auf Basis einer digitalen Beschreibung der Module 10, welche die Eigenschaften der Module 10 etc. umfasst, geplant werden, ob die Module 10 eine externe Stromversorgung oder externe Kommunikationsmodule etc. benötigen. Ferner können auch geometrische Nebenbedingungen, wie beispielsweise die Erreichbarkeit der Module 10 durch die zentrale Einheit 20 berücksichtigt werden. Die Planungssoftware kann weiterhin auch 3D gedruckte Module 10 unterstützen, die auf Basis der digitalen Beschreibung der Module 10 generiert werden können.

Die Software-Anwendungen können lokal auf der zentralen Einheit 20 gespeichert werden. Alternativ oder zusätzlich können die Software-Anwendungen auf einer Cloud-Infrastruktur etc. gespeichert werden. Die Speicherung und Berechnung der rechenaufwändigen Anwendungen auf der Cloud-Infrastruktur hat sich als besonders vorteilhaft erwiesen, da die zentrale Einheit 20 dadurch entlastet wird.

Zusätzlich oder alternativ zu den genannten Anwendungen können auch eine Ausführungssoftware, eine Ordersoftware, eine Kommunikationssoftware und/oder eine Modul-Anwendungssoftware verwendet werden.

Mit der Ordersoftware- oder Schnittstelle können die Module 10, welche für die Umsetzung erforderlich sind, aus einem Katalog oder aus einem Lagersystem geordert werden. Die Module 10 sind beispielsweise bereits in einem Lager verfügbar, können bei Bedarf auch angefertigt werden oder von Lieferanten bestellt werden. Die Fertigung kann mittels 3D Druck erfolgen.

Die Kommunikationssoftware ermöglicht die automatische Herstellung eines Kommunikationskanals zu den Modulen 10, um beispielsweise auf Sensordaten zuzugreifen und diese anzusteuern etc.

Die Modul-Anwendungssoftware dient der Steuerung der Module 10. Bei Aktoren erfolgt die Regelung und Steuerung beispielsweise auf Basis der Anwendungskommandos. Bei Sensoren kann die Steuerung auch die Datenweiterverarbeitung enthalten.

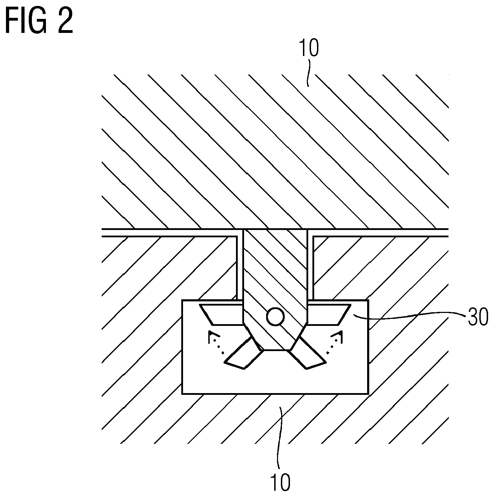

In Figur 2 ist eine mechanische Verbindung 30 gemäß einer Ausführungsform der Erfindung dargestellt. Die mechanische Verbindung 30 ist als Haltenasen ausgebildet. Ein Modul 10 der Vielzahl der Module 10 ist mit einem anderen Modul 10 über die Haltenasen 30 verbunden, wie gezeigt.

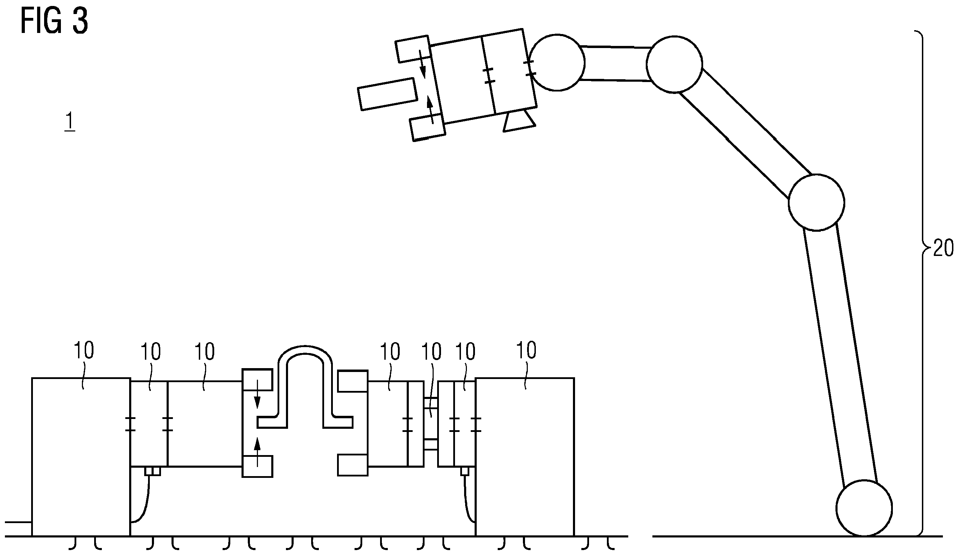

In Figur 3 ist ein autonomes System 1 gemäß einer Ausführungsform der Erfindung dargestellt. Die Module 10 des autonomen Systems 1 sind als Haltevorrichtung für Bauteile kombiniert. Sie sind beispielsweise auf einer Profilschiene 10 angeordnet. Ihre Anordnung wird im Einzelnen von außen nach innen beschrieben, wie folgt.

Die äußeren Module 10 sind als Strukturbauelemente ausgebildet. Die Strukturbauelemente grenzen an Stromversorgungs-, Kabel- oder Batterieelemente an. Die Stromversorgungs-, Kabel- oder Batterieelemente grenzen an Greiferelemente an. Weiterhin ist ein Modul 10 des autonomen Systems 1 als Robotereinheit ausgebildet. Die Robotereinheit 10 weist ein Greiferelement und ein Kameraelement auf. Durch das Kameraelement kann die Robotereinheit beispielsweise flexibel ihren Sichtbereich auf die anderen Module 10 wählen oder einstellen. Alternativ kann das Kameraelement auch nicht mit der Robotereinheit 20 kombiniert werden, sondern mit anderen Strukturbauelementen und/oder Rotationsaktorelementen. Die Module 10 können beliebig miteinander kombiniert werden.

Durch das entsprechende erfindungsgemäße Verfahren können vorteilhafterweise jegliche unterschiedliche Konfigurationen durch die zentrale Einheit autonom geplant und umgesetzt werden.

## Patentansprüche

1. Autonomes System (1), aufweisend:
a. mindestens ein Modul (10) mit mindestens einer Eigenschaft (12),
b. eine zentrale Einheit (20), wobei
c. die zentrale Einheit (20)
- zum Planen einer Konfiguration des mindestens einen Moduls (10) auf Basis der mindestens einen Eigenschaft (12) und
- zum Umsetzen der geplanten Konfiguration mittels des mindestens einen Moduls (10) eingerichtet.

2. Autonomes System nach Anspruch 1, wobei die zentrale Einheit (20) eine Steuerungseinheit oder eine sonstige Rechnereinheit ist.

3. Autonomes System nach Anspruch 1 oder Anspruch 2, wobei mindestens eine Anwendung zum Planen und/oder Umsetzen auf der zentralen Einheit (20) gespeichert sind.

4. Autonomes System nach einem der vorhergehenden Ansprüche, wobei die mindestens eine Eigenschaft (12) des mindestens einen Moduls (10) und/oder mindestens eine Eigenschaft der zentralen Einheit (20) als digitale Beschreibung (30) gespeichert sind.

5. Autonomes System nach einem der vorhergehenden Ansprüche, wobei die mindestens eine Eigenschaft (12) des mindestens einen Moduls (10) eine bestimmte Geometrie, eine Griffpose oder ein Identifikationselement, insbesondere ein Marker oder sonstiger Tag, ist.

6. Autonomes System nach einem der vorhergehenden Ansprüche, wobei das mindestens eine Modul (10) mindestens eine Verbindung (30) zu mindestens einem weiteren Modul (10), der zentralen Einheit (20) und/oder einer anderen Einheit aufweist.

7. Autonomes System nach Anspruch 6, wobei das mindestens eine Modul (10) und/oder die zentrale Einheit (20) mindestens eine Schnittstelle (14) für die mindestens eine Verbindung (30) aufweist.

8. Autonomes System nach Anspruch 6 oder Anspruch 7, wobei die mindestens eine Verbindung eine mechanische Verbindung, eine Kommunikationsverbindung oder eine Verbindung zur Energieversorgung ist.

9. Autonomes System nach Anspruch 8, wobei die mechanische Verbindung durch Normung standardisiert ist.

10. Autonomes System nach Anspruch 8 oder Anspruch 9, wobei die mechanische Verbindung durch einen Druckknopf oder einen Aktor hergestellt und getrennt werden kann.

11. Autonomes System nach Anspruch 8, wobei die Kommunikationsverbindung eine Busverbindung oder eine Funkverbindung für den Datenaustausch ist.

12. Autonomes System nach einem der vorhergehenden Ansprüche, wobei die zentrale Einheit (20) weiterhin zum Ordern des mindestens einen Moduls (10) oder anderer Elemente eingerichtet ist.

13. Computer-implementiertes Verfahren, aufweisend die folgenden Schritte:
- Planen einer Konfiguration mindestens eines Moduls (10) auf Basis mindestens einer Eigenschaft (12) des mindestens einen Moduls (10) durch eine zentrale Einheit (20), und
- Umsetzen der geplanten Konfiguration mittels des mindestens einen Moduls (10) durch die zentrale Einheit (20).

14. Computerprogrammprodukt mit einem Computerprogramm, das Mittel zur Durchführung des Verfahrens nach Anspruch 13 aufweist, wenn das Computerprogramm auf einer programmgesteuerten Einrichtung zur Ausführung gebracht wird.

15. Zentrale Einheit, eingerichtet zum Durchführen des Verfahrens nach Anspruch 13.
